# EUROPEAN PATENT SPECIFICATION

(11) **EP 3 294 995 B1**
(45) Date of publication and mention of the grant of the patent: **27.02.2019**
(21) Application number: 16726797.0
(22) Date of filing: 10.05.2016
(51) Int. Cl.: F01D 25/16, F02C 7/06

(54) **CONTAINMENT SLEEVE OF A TURBOMACHINERY BEARING AND TURBOMACHINERY EQUIPPED WITH SAID SLEEVE**
SICHERHEITSHÜLLE EINES TURBOMASCHINENLAGERS UND TURBOMASCHINE DAMIT
MANCHON DE CONFINEMENT D'UN PALIER DE TURBOMACHINE ET TURBOMACHINE ÉQUIPÉE DUDIT MANCHON

(30) Priority: 12.05.2015 IT MI20150661
(43) Date of publication of application: 21.03.2018
(73) Proprietor: NUOVO PIGNONE TECNOLOGIE SRL, 50127 Florence (IT)
(72) Inventor: SIGNORI, Andrea, 50127 Florence (IT)
(74) Representative: Illingworth-Law, William Illingworth
(86) International application number: PCT/EP2016/060390
(87) International publication number: WO 2016/180808

(56) References cited:
- WO-A1-2015/002774
- US-B2- 6 893 208

## Description

### TECHNICAL FIELD

Embodiments of the subject matter disclosed herein correspond to a containment sleeve of a turbomachinery bearing and to a turbomachinery equipped with said containment sleeve.

### BACKGROUND ART

A turbomachinery, in particular a gas turbine is normally defined as a rotating thermal machine, which converts heat into work, using a gas directly provided from a combustion and which supplies mechanical power on a rotating shaft. It generally comprise a compressor or turbo compressor, normally the axial type, within which air arriving from the exterior is carried under pressure. Further, various injectors supply the fuel, which is mixed with air in order to form an air-fuel injection mix.

The axial compressor is driven by a dedicated turbine, which supplies mechanical power to a utilizer, transforming the enthalpy of the fuel within the combustion chamber.

The dedicated turbine, the turbo-compressor, the combustion chamber (or boiler), the mechanical power output shaft, the control system and the starting system constitute the essential parts of a gas turbine plant.

With regard to the functioning of a gas turbine, it is to be noted that the flow penetrates into the compressor through a series of inlet pipes. In this channeling, the gas presents characteristics of low pressure and low temperature, while, in passing through the compressor, the gas is compressed and its temperature increases.

The compressed gas, then, penetrates into the combustion chamber (or the boiler chamber), where it is subjected to a further increase in temperature. The heat necessary for the increase in temperature of the gas is supplied from the combustion of fuel, which may be liquid, introduced into the boiler chamber, through the injectors.

The ignition of the fuel, on the start-up of the machine, may be obtained through spark plugs.

On leaving the combustion chamber, the gas, at high-pressure and at high temperature, through apposite pipes, arrives at the turbine, where it releases part of the energy accumulated in the compressor and in the combustion chamber and then flows to the exterior through the exhaust channeling.

The work transferred by the gas to the turbine is greater than the one absorbed in the compressor. Therefore, a certain quantity of energy remains available on the shaft of the machine. This quantity of energy, diminished by the work absorbed by the accessories and by the passive resistance of the mechanical components in movement, constitutes the useful work of the plant.

From the design point of view, the blades of the axial compressor and of the turbine may be mounted on a single shaft, which may be supported by two turbomachinery bearings, generally produced in two half shells joining on a horizontal plane.

A common layout of the bearings provides a first bearing situated at the inlet of the compressor, while a second bearing is positioned between the axial compressor and the turbine; this design is extremely reliable and resistant.

US 6,893,208-B2 describes a turbomachinery bearing surrounded and supported by a containment sleeve. The containment sleeve provides a cylindrical surface shaped to support the bearing coupling with its outer surface, and two holes connected to pipes designed to drain lubrication/refrigeration fluid leaving the bearing. It further comprises a fist and a second chamber provided at the sides of the cylindrical surface where the lubricant that exits the bearing can gather and drain to the holes.

A cross-shaped groove is realized on the cylindrical surface in order to connect at the same time the first hole with the second hole and the first chamber with the second chamber. In this way the lubricant can flow from the first and second chamber to the first and second hole.

With this configuration a sufficient amount of lubricant can be drained from the bearing, but the cross-shaped groove influences the stiffness of the bearing support. WO 2015/002774 A1 discloses a turbocharger having a rotatable shaft passing through a bearing housing with a turbine-end bearing support with a support bar.

It should be noted that in small turbomachinery, the space between the compressor and the turbine, designed to house the containment sleeve and the second turbine bearing, is very limited.

This is due to the presence of the combustion chamber and of many service connections, such as the piping in which runs the lubrication oil and the sealing means.

In such kind of turbomachinery, a smaller bearing can be used, but the containment sleeve size cannot be reduced accordingly due to stiffness problems generated by its design.

### SUMMARY

Therefore, there is a general need to provide a containment sleeve of improved stiffness, which further allows to drain a sufficient quantity of lubricant from the bearing.

In particular there is a need to provide a containment sleeve of reduced overall dimensions preserving a sufficient stiffness to support the bearing.

An important idea is to create a continuous support wall for the bearing in that part of the containment sleeve placed between the draining holes.

According to the present invention there is provided a containment sleeve as defined in claim 1 and turbomachinery as defined in claim 5.

First embodiments of the subject matter disclosed herein correspond to a containment sleeve of a turbine bearing.

Second embodiments of the subject matter disclosed herein correspond to a turbomachinery, in particular a gas turbine.

### BRIEF DESCRIPTION OF DRAWINGS

The accompanying drawings, which are incorporated herein and constitute a part of the specification, illustrate exemplary embodiments of the present invention and, together with the detailed description, explain these embodiments. In the drawings:
Fig. 1 is a simplified axial section of a turbomachinery, in particular of a gas turbine,
in that part comprised between a compressor and a turbine;
Fig. 2 is a simplified cross section taken on the line II-II of fig. 1;
Fig. 3 is a simplified cross section taken on the line III-III of fig 2;
Fig. 4 is a simplified cross section taken on the line IV-IV of fig 2;
Fig.5 is a simplified cross section taken on the line V-V, where the shaft 20 is not shown; and
Fig. 6 shows a simplified and partial section of a turbomachinery.

### DETAILED DESCRIPTION

The following description of exemplary embodiments refers to the accompanying drawings.

The following description does not limit the invention. Instead, the scope of the invention is defined by the appended claims.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

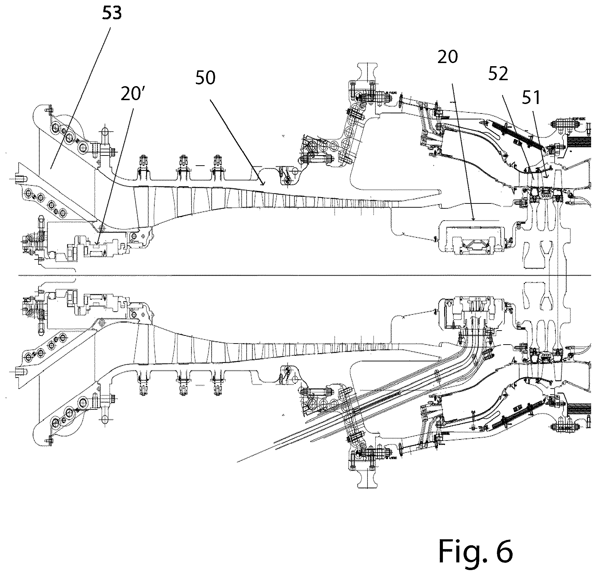

With particular reference to fig. 6, a turbomachinery is shown, in particular a gas turbine.

The turbomachinery comprises an axial air compressor 50 driven by a turbine 51 with a plurality of blades 52, said compressor 50 and said turbine blades 52 being installed on a common shaft 20 supported by turbomachinery bearings 22, 22'. The shaft 20 may be realized in a single piece, or in different parts torsionally connected.

The shaft 20 may be supported by a first turbomachinery bearing 22' located at an inlet 53 of the axial compressor 50 and a second turbomachinery bearing 22 located between said axial compressor 50 and said turbine 51.

The present description will be mainly focused on the second turbomachinery bearing 22 and its containment sleeve 23, designed to support it. In fact, in this part of the turbomachinery, the available space for the bearing is much limited due to the presence of many components like the burner, oil feeding and draining pipes etc. It should anyway be noted that the design features of the second bearing 22 and its containment sleeve 23, can also be applied to the first turbine bearing 22' and its containment sleeve.

Even if the present description relates to a gas turbine, the bearing hereby described may be used on any kind of turbomachine.

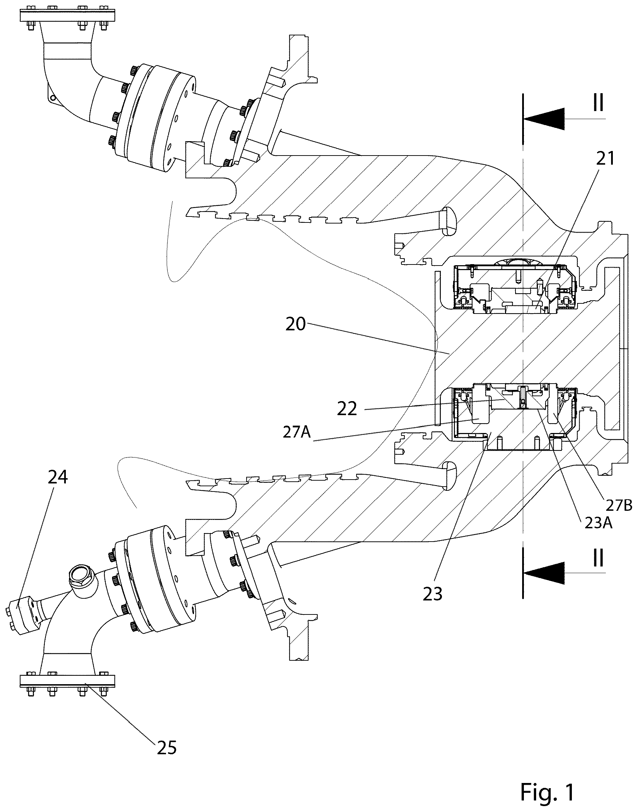

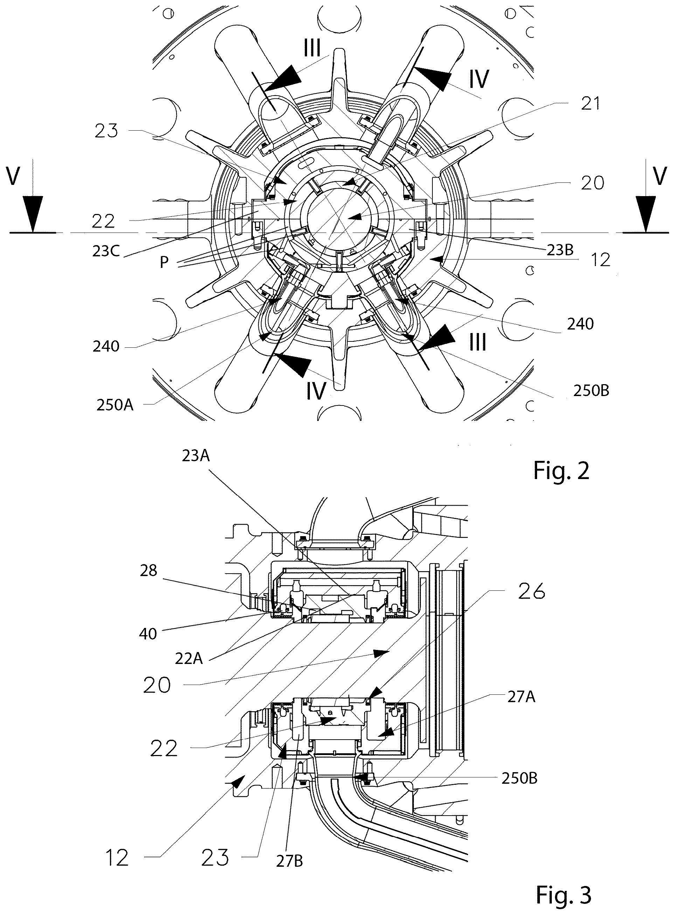

With particular reference to figures 1-5, with 20 a central shaft of the turbomachinery 1 is indicated. The shaft rotates on a series of studs 21 fixed to a housing. The housing and the studs form a turbomachinery bearing 22.

The housing provides support for the studs 21. It also provides lateral seals 26 (that may be floating rings) cooperating with the shaft 20, to confine a lubricating/cooling fluid close to the shaft 20.

The turbomachinery bearing 22 is surrounded and supported by a containment sleeve 23 that may be formed by a first 23B and second part 23C (half shells). The sleeve 23 is connected with a lubricant/coolant fluid feeding system 24 and a lubricant/coolant fluid draining system 25.

The lubricant/coolant fluid is fed under pressure to a chamber 28 located in that part of the shaft 20 supported by the studs 21, through feeding pipes 240 and passages provided in the containment sleeve 23.

When the shaft 20 rotates, part of the lubricant/coolant fluid leaks through the lateral seals 26 and accumulates in a first 27A and a second groove 27B defined by the containment sleeve 23 and disposed at opposites sides with respect to a surface 23A designed to support the turbomachinery bearing 22 on its outer surface 22A.

The surface 23A may have a cylindrical shape in order to couple with the turbine bearing outer surface 22A. The groves 27A and 27B may assume an annular shape to surround the shaft 20, to form, together with the shaft 20, the bearing and its seals 26, and further seals 40 provided on the sleeve 23, two containment chambers for the lubricating/cooling fluid.

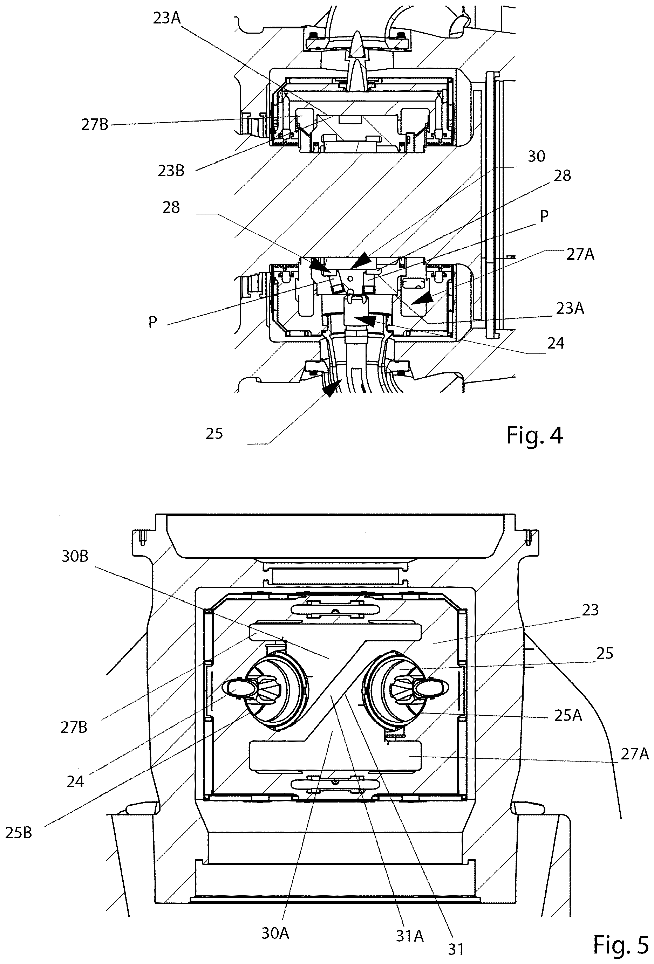

On the surface 23A, configured to support a turbomachinery bearing 22, a first 25A and a second hole 25B opens. The holes are respectively connected (see fig.5) to a first 250A and a second draining pipe 250B, which are part of the draining system 25.

The first 25A and second holes 25B are provided on the surface 23A to collect the lubricating/cooling fluid draining, mainly by gravity, from the first 27A and a second groove 27B. For this reason the containment sleeve 23 defines a first channel 30A fluidly connecting the first hole 25A with the first groove 27A, and a second channel 30B fluidly connecting the second hole 25B with said second groove 27B.

According to one aspect of the invention the first 30A and the second channel 30B open on the surface 23A and are separated by a wall 31 having at least a bearing support surface 31A that is part of said surface 23A.

The bearing support surface 31A provide a rigid support for the bearing also in the central part of the containment sleeve 23, therefore improving its stiffness.

With reference to fig. 5, it may be noted that the wall 31 extends between the first hole 25A and the second hole 25B and between the first groove 27A and second groove 27B.

The wall 31 may extend form a side of the first hole proximal to said first groove 27A to a side of the second hole 25B proximal to said second groove 27B.

The presence of the wall 31, that improves the stiffness of the containment sleeve 23, may allow a further reduction of the dimensions of the sleeve 23 (all with respect to the sleeve described in US 6,893,208-B2); therefore a further reduction of the axial length of the sleeve to a minimum value may be possible.

One embodiment of the invention has been described, but it is clear that there are numerous other variants which may be realized, without departing from the scope of the appended claims.

## Claims

1. Containment sleeve (23) of a turbomachinery bearing (22), the containment sleeve (23) comprising a sleeve body defining a surface (23A) configured to support a turbomachinery bearing (22), and at least a first hole (25A) and a second hole (25B) opening on said surface (23A), said first hole (25A) and second hole (25B) being provided to collect lubricating/cooling fluid draining from said bearing, the sleeve body further defining a first groove (27A) and a second groove (27B) disposed at opposite sides of said surface (23A), a first channel (30A) fluidly connecting said first hole (25A) with said first groove (27A), and a second channel (30B) fluidly connecting said second hole (25B) with said second groove (27B), the first and the second channel being opened on said surface (23A) and being separated by a wall (31) having at least a bearing support surface (31A) that is part of said surface (23A).

2. Containment sleeve (23) according to the previous claim, wherein the sleeve body is formed by a first part (23B) wherein said first (25A) and second hole (25B) are provided, and a second part (23C) configured to cooperate with the first part to form said surface (23A) and said grooves (27A, 27B), said surface (23A) being cylindrical and said grooves (27A, 27B) being annular.

3. Containment sleeve (23) according to one or more of the previous claims, wherein said wall (31) extends between the said first hole (25A) and second hole (25B) and/or between the first groove (27A) and second groove (27B).

4. Containment sleeve (23) according to one or more of the previous claims, wherein said wall (31) extends from a side of the first hole (25A) proximal to said first groove (27A) to a side of the second hole (25B) proximal to said second groove (27B).

5. Turbomachinery comprising at least a turbomachinery bearing (22) housed in a containment sleeve (23) according to one or more of claims 1-4.

6. Turbomachinery according to the previous claim, comprising an axial compressor (50) and a gas turbine (51) installed on a common shaft (20), wherein the turbomachinery bearing (22) is located between said axial compressor (50) and said turbine (51).

7. Turbomachinery according to the previous claim, wherein the turbomachinery bearing (22) comprises a plurality of studs (21) cooperating with said shaft (20), and a housing having an outer surface (22A) coupled with the surface (23A) of the containment sleeve (23).

8. Turbomachinery according to claim 6 or claim 7, wherein the housing comprises lateral seals (26) cooperating with said shaft (20).

9. Turbomachinery according to one or more of claims 5 to 8, wherein a first oil drain pipe (250A) and a second oil drain pipe (250B) are connected to said first (25A) and second hole (25B).

10. Turbomachinery according to claim 6 or any claim dependent on claim 6, wherein said containment sleeve (23) presents further lateral seals (40) cooperating with said shaft (20).

## Patentansprüche

1. Sicherheitshülse (23) eines Turbomaschinenlagers (22), wobei die Sicherheitshülse (23) einen Hülsenkörper, der eine Oberfläche (23A) definiert, die konfiguriert ist, um ein Turbomaschinenlager (22) zu stützen, und mindestens ein erstes Loch (25A) und ein zweites Loch (25B), die sich an der Oberfläche (23A) öffnen, umfasst, wobei das erste Loch (25A) und zweite Loch (25B) bereitgestellt sind, um Schmier-/Kühlfluid, das vom Lager abläuft, zu sammeln, wobei der Hülsenkörper weiter eine erste Nut (27A) und eine zweite Nut (27B) definiert, die an gegenüberliegenden Seiten der Oberfläche (23A) angeordnet sind, wobei ein erster Kanal (30A) das erste Loch (25A) mit der ersten Nut (27A) fluidisch verbindet, und wobei ein zweiter Kanal (30B) das zweite Loch (25B) mit der zweiten Nut (27B) fluidisch verbindet, wobei der erste und der zweite Kanal an der Oberfläche (23A) geöffnet sind und durch eine Wand (31) getrennt sind, die mindestens eine Lagerstützoberfläche (31A) aufweist, die Teil der Oberfläche (23A) ist.

2. Sicherheitshülse (23) nach dem vorstehenden Anspruch, wobei der Hülsenkörper durch einen ersten Teil (23B) gebildet ist, wobei das erste (25A) und zweite Loch (25B) bereitgestellt sind, und ein zweiter Teil (23C) konfiguriert ist, um mit dem ersten Teil zusammenzuwirken, um die Oberfläche (23A) und die Nuten (27A, 27B) zu bilden, wobei die Oberfläche (23A) zylinderförmig ist und die Nuten (27A, 27B) ringförmig sind.

3. Sicherheitshülse (23) nach einem oder mehreren der vorstehenden Ansprüche, wobei sich die Wand (31) zwischen dem ersten Loch (25A) und zweiten Loch (25B) und/oder zwischen der ersten Nut (27A) und zweiten Nut (27B) erstreckt.

4. Sicherheitshülse (23) nach einem oder mehreren der vorstehenden Ansprüche, wobei sich die Wand (31) von einer Seite des ersten Lochs (25A) proximal zur ersten Nut (27A) zu einer Seite des zweiten Lochs (25B) proximal zur zweiten Nut (27B) erstreckt.

5. Turbomaschine, umfassend mindestens ein Turbomaschinenlager (22), das in einer Sicherheitshülse (23) nach einem der Ansprüche 1-4 untergebracht ist.

6. Turbomaschine nach dem vorstehenden Anspruch, umfassend einen Axialkompressor (50) und eine Gasturbine (51), die auf einer gemeinsamen Welle (20) installiert ist, wobei sich das Turbomaschinenlager (22) zwischen dem Axialkompressor (50) und der Turbine (51) befindet.

7. Turbomaschine nach dem vorstehenden Anspruch, wobei das Turbomaschinenlager (22) eine Vielzahl von Bolzen (21), die mit der Welle (20) zusammenwirken, und ein Gehäuse umfasst, das eine äußere Oberfläche (22A) aufweist, die mit der Oberfläche (23A) der Sicherheitshülse (23) gekoppelt ist.

8. Turbomaschine nach Anspruch 6 oder Anspruch 7, wobei das Gehäuse seitliche Dichtungen (26) umfasst, die mit der Welle (20) zusammenwirken.

9. Turbomaschine nach einem oder mehreren der Ansprüche 5 bis 8, wobei ein erstes Ölablaufrohr (250A) und ein zweites Ölablaufrohr (250B) mit dem ersten (25A) und zweiten Loch (25B) verbunden sind.

10. Turbomaschine nach Anspruch 6 oder einem von Anspruch 6 abhängigen Anspruch, wobei die Sicherheitshülse (23) weitere seitliche Dichtungen (40) vorweist, die mit der Welle (20) zusammenwirken.

## Revendications

1. Manchon de confinement (23) d'un palier de turbomachine (22), le manchon de confinement (23) comprenant un corps de manchon définissant une surface (23A) configurée pour supporter un palier de turbomachine (22), et au moins un premier trou (25A) et un second trou (25B) s'ouvrant sur ladite surface (23A), ledit premier trou (25A) et ledit second trou (25B) étant fournis pour collecter un fluide de lubrification/refroidissement s'écoulant à partir dudit palier, le corps de manchon définissant en outre une première rainure (27A) et une seconde rainure (27B) disposées sur des côtés opposés de ladite surface (23A), un premier canal (30A) reliant de manière fluidique ledit premier trou (25A) à ladite première rainure (27A), et un second canal (30B) reliant de manière fluidique ledit second trou (25B) à ladite seconde rainure (27B), les premier et second canaux étant ouverts sur ladite surface (23A) et étant séparés par une paroi (31) ayant au moins une surface de support de palier (31A) qui fait partie de ladite surface (23A).

2. Manchon de confinement (23) selon la revendication précédente, dans lequel le corps de manchon est formé par une première partie (23B) dans laquelle ledit premier trou (25A) et ledit second trou (25B) sont fournis, et une seconde partie (23C) configurée pour coopérer avec la première partie pour former ladite surface (23A) et lesdites rainures (27A, 27B), ladite surface (23A) étant cylindrique et lesdites rainures (27A, 27B) étant annulaires.

3. Manchon de confinement (23) selon une ou plusieurs des revendications précédentes, dans lequel ladite paroi (31) se prolonge entre ledit premier trou (25A) et ledit second trou (25B) et/ou entre la première rainure (27A) et la seconde rainure (27B).

4. Manchon de confinement (23) selon une ou plusieurs des revendications précédentes, dans lequel ladite paroi (31) se prolonge à partir d'un côté du premier trou (25A) proximal à ladite première rainure (27A) vers un côté du second trou (25B) proximal à ladite seconde rainure (27B).

5. Turbomachine comprenant au moins un palier de turbomachine (22) logé dans un manchon de confinement (23) selon une ou plusieurs des revendications 1 à 4.

6. Turbomachine selon la revendication précédente, comprenant un compresseur axial (50) et une turbine à gaz (51) installés sur un arbre commun (20), dans laquelle le palier de turbomachine (22) est situé entre ledit compresseur axial (50) et ladite turbine (51).

7. Turbomachine selon la revendication précédente, dans laquelle le palier de turbomachine (22) comprend une pluralité de goujons (21) coopérant avec ledit arbre (20), et un logement ayant une surface externe (22A) couplée à la surface (23A) du manchon de confinement (23).

8. Turbomachine selon la revendication 6 ou la revendication 7, dans laquelle le logement comprend des joints d'étanchéité latéraux (26) coopérant avec ledit arbre (20).

9. Turbomachine selon une ou plusieurs des revendications 5 à 8, dans laquelle un premier tuyau de purge d'huile (250A) et un second tuyau de purge d'huile (250B) sont raccordés audit premier trou (25A) et audit second trou (25B).

10. Turbomachine selon la revendication 6 ou n'importe quelle revendication dépendante de la revendication 6, dans laquelle ledit manchon de confinement (23) présente des joints d'étanchéité latéraux (40) supplémentaires coopérant avec ledit arbre (20).
